# FASCICULE DE BREVET EUROPEEN

(11) **EP 1 554 321 B1**
(45) Date de publication et mention de la délivrance du brevet: **04.06.2014**
(21) Numéro de dépôt: 03776864.5
(22) Date de dépôt: 13.10.2003
(51) Int. Cl.: C08F 210/12, C08F 236/06, C07F 17/00, C08F 4/52

(54) **COPOLYMERES ETHYLENE/BUTADIENE, SYSTEME CATALYTIQUE POUR LES PRODUIRES ET PRODUCTION DESDITS POLYMERES**
ETHYLEN/BUTADIEN COPOLYMERE, VERFAHREN ZU DEREN HERSTELLUNG UND KATALYSATOR SYSTEM
ETHYLENE/BUTADIENE COPOLYMERS, CATALYTIC SYSTEM OF PRODUCING SAME AND PRODUCTION OF SAID POLYMERS

(30) Priorité: 16.10.2002 FR 0212893
(43) Date de publication de la demande: 20.07.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH); TOTAL RESEARCH & TECHNOLOGY FELUY, 7181 Seneffe (BE)
(72) Inventeur: MONTEIL, Vincent, 69003 Lyon (FR); SPITZ, Roger, F-69006 Lyon (FR); BOISSON, Christophe, F-01390 Tramoyes (FR)
(74) Mandataire: Le Cam, Véronique Marie Christine
(86) Numéro de dépôt international: PCT/EP2003/011303
(87) Numéro de publication internationale: WO 2004/035639

(56) Documents cités:
- EP-A- 1 092 731
- LLAURO, MARIE FRANCE ET AL: "Investigation of ethylene/butadiene copolymers microstructure by 1H and 13C NMR" MACROMOLECULES (2001), 34(18), 6304-6311 , XP002244179
- NAKAMURA, HIROSHI ET AL: "Alternative.eta.5- and.eta.6-Bonding Modes for Bis(fluorenyl)lanthanide Complexes by Reactions with AlR3 and Successive Addition of THF" ORGANOMETALLICS (2000), 19(25), 5392-5399 , XP002244180
- EVANS, WILLIAM J. ET AL: "Copolymerization of Ethylene Carbonate and.epsilon.-Caprolactone Using Samarium Complexes" MACROMOLECULES (1994), 27(14), 4011-13 , XP002244181
- CUI L ET AL: "PRELIMINARY INVESTIGATIONS ON POLYMERIZATION CATALYSTS COMPOSED OF LANTHANOCENE AND METHYLALUMINOXANE" POLYMER BULLETIN, SPRINGER VERLAG. HEIDELBERG, DE, vol. 40, no. 6, 1 juin 1998 (1998-06-01), pages 729-734, XP000755393 ISSN: 0170-0839

## Description

La présente invention concerne des copolymères d'éthylène et de butadiène, un système catalytique utilisable pour la synthèse de ces copolymères et un procédé de synthèse de ces copolymères au moyen de ce système catalytique.

Pour la copolymérisation de l'éthylène et d'un diène conjugué, il est connu d'utiliser des systèmes catalytiques à base de complexes halogénés de métaux de transition, tels que le titane.

Les documents de brevet japonais JP-A-10 237 131, JP-A-09 316 118 et JP-A-11 171 930 divulguent des copolymères d'éthylène et de butadiène dans lesquels le butadiène peut être inséré sous forme d'enchaînements cis-1,4, trans-1,4, 1,2, cis-cyclopentyl et trans-cyclopentyl. Ces copolymères sont obtenus au moyen d'un système catalytique comprenant du diméthylsilyl(pentaméthylcyclopentadiényl)(t-butylamide)titane-dichlorure et du méthylalumoxane.

Pour la copolymérisation de l'éthylène et d'un diène conjugué, il est également connu d'utiliser des systèmes catalytiques à base de complexes halogénés de lanthanides.

En particulier, le document de brevet EP-A-1 092 731 et l'article « Macromolecules, Vol. 33, n° 23, pp. 8521-8523 (2000) » enseignent dans leurs essais de copolymérisation que l'association à un co-catalyseur choisi dans un groupe comprenant un alkyl magnésium, un alkyl lithium, un alkyl aluminium, un réactif de Grignard ou un mélange de ces constituants, d'un complexe organométallique représenté par l'une des formules génériques suivantes A ou B: 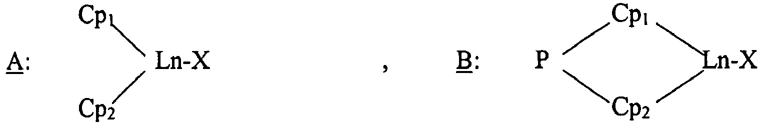
- où Ln représente un métal d'un lanthanide dont le numéro atomique peut aller de 57 à 71,
- où X représente un halogène pouvant être le chlore, le fluor, le brome ou l'iode,
- où, dans la formule A, sont reliées à Ln deux molécules de ligands Cp₁, Cp₂ identiques ou différentes, constituées chacune d'un groupe cyclopentadiényle ou fluorényle substitué ou non,
- où, dans la formule B, est reliée audit métal Ln une molécule de ligand, constituée de deux groupes cyclopentadiényle ou fluorényle Cp₁ et Cp₂ qui sont substitués ou non et qui sont reliés entre eux par un pont P répondant à la formule MR₂, où M est un élément de la colonne IVA de la classification périodique de Mendeleev et où R est un groupe alkyle de 1 à 20 atomes de carbone,
- où le rapport molaire (co-catalyseur/ complexe organométallique) est égal à 20,
permet de synthétiser des copolymères d'éthylène et d'un diène conjugué avec un rendement de polymérisation satisfaisant.

Dans ce document EP-A-1 092 731, il apparaît que les copolymères obtenus présentent des unités issues du butadiène qui peuvent comporter ou pas des enchaînements sous forme de trans-1,2 cyclohexane, en fonction du système catalytique utilisé. De plus, les copolymères obtenus dans ce document présentent, lorsqu'ils présentent un taux molaire d'unités issues du butadiène d'au moins 8 %, une masse moléculaire moyenne en nombre Mn, mesurée par la technique de chromatographie d'exclusion par la taille en équivalent polystyrène (technique SEC détaillée à l'annexe jointe), qui est réduite, étant toujours nettement inférieure à 40 000 g/mol.

Un but de la présente invention est de proposer un nouveau système catalytique utilisable pour la synthèse de copolymères spécifiques d'éthylène et de butadiène qui présentent un taux molaire d'unités issues du butadiène d'au moins 8 %, des enchaînements trans-1,2 cyclohexane dans lesdites unités et une masse moléculaire Mn supérieure à celles des copolymères obtenus dans ce document EP-A-1 092 731.

Ce but est atteint en ce que les demanderesses viennent de découvrir d'une manière surprenante que la sélection, dans le système catalytique précité dudit document EP-A-1 092 731 :
(i) de deux molécules de ligands Cp₁ et Cp₂ identiques ou différentes reliées au métal Ln et constituées chacune d'un groupe fluorényle substitué ou non, si ledit complexe organométallique vérifie ladite formule A, ou d'une molécule de ligand reliée au métal Ln et constituée de deux groupes fluorényle Cp₁ et Cp₂ identiques ou différents, substitués ou non et reliés entre eux par un pont P de formule MR₂, où M est un élément de la colonne IVA et R un groupe alkyle de 1 à 20 atomes de carbone, si ledit complexe organométallique vérifie ladite formule B, et
(ii) d'un rapport molaire (co-catalyseur/ complexe organométallique) appartenant spécifiquement à un domaine allant de 1 à 8,
permet d'obtenir des copolymères d'éthylène et de butadiène avec un rendement de polymérisation satisfaisant, ces copolymères comportant toujours des enchaînements trans-1,2 cyclohexane au sein des unités issues du butadiène, un taux molaire de ces unités issues du butadiène qui est égal ou supérieur à 8 % et une masse moléculaire Mn, mesurée selon la technique SEC en équivalent polystyrène de l'annexe jointe, qui est égale ou supérieure à 40 000 g/mol.

A la connaissance des demanderesses, ces caractéristiques combinées d'enchaînements trans-1,2 cyclohexane, de taux molaire d'unités issues du butadiène d'au moins 8 %, et de masse moléculaire Mn élevée n'ont jamais été atteintes à ce jour pour des copolymères d'éthylène et de butadiène.

On notera qu'il n'était pas évident d'obtenir des masses moléculaires Mn aussi élevées pour des copolymères d'éthylène et de butadiène obtenus au moyen d'un système catalytique à base d'un complexe halogéné de lanthanide, qui présentent ce taux molaire d'unités issues du butadiène. En effet, pour un homme du métier, il est bien connu (voir l'article précité « Macromolecules, Vol. 33, n° 23, pp. 8521-8523 (2000) ») que les copolymères obtenus au moyen d'un tel système catalytique présentent une masse moléculaire Mn qui est d'autant plus élevée (ou réduite) que le taux molaire d'unités issues du butadiène est plus réduit (respectivement plus élevé).

On notera également que l'utilisation de groupes spécifiques fluorényle rend possible l'obtention d'enchaînements trans-1,2 cyclohexane dans les copolymères obtenus, et que la valeur très réduite du rapport molaire (co-catalyseur/ complexe organométallique) rend possible l'obtention de copolymères présentant au moins 8 % d'unités issues du butadiène et néanmoins une masse moléculaire Mn élevée.

De préférence, les copolymères selon l'invention sont tels que leurs unités issues du butadiène comprennent des enchaînements sous forme de trans-1,2 cyclohexane selon une fraction molaire égale ou supérieure à 1 % et, à titre encore plus préférentiel, égale ou supérieure à 5 %. On se reportera à l'article « Investigation of ethylene/ butadiene copolymers microstructure by ¹H and ¹³C NMR, Llauro M. F., Monnet C., Barbotin F., Monteil V., Spitz R., Boisson C., Macromolecules 2001, 34, 6304-6311 », pour une description détaillée des techniques de RMN¹H et de RMN¹³C qui ont été précisément utilisées dans la présente demande pour déterminer les fractions molaires de ces enchaînements trans-1,2 cyclohexane.

Avantageusement, les copolymères d'éthylène et de butadiène selon l'invention présentent une masse Mn égale ou supérieure à 50 000 g/mol et même égale ou supérieure à 80 000 g/mol, de préférence en utilisant un rapport molaire (co-catalyseur/ complexe organométallique) de valeur égale ou sensiblement égale à 2, par exemple appartenant à un domaine allant de 1 à 3.

A titre encore plus avantageux, ces copolymères selon l'invention peuvent présenter une masse Mn égale ou supérieure à 100 000 g/mol, et même égale ou supérieure à 200 000 g/mol ou 300 000 g/mol.

Egalement à titre avantageux, les copolymères selon l'invention présentent en outre un taux molaire d'unités issues du butadiène qui est égal ou supérieur à 10 %, et qui peut même être égal ou supérieur à 15 %.

A titre encore plus avantageux, les copolymères d'éthylène et de butadiène selon l'invention peuvent présenter un taux molaire d'unités issues du butadiène qui est égal ou supérieur à 20 %, et qui peut même être égal ou supérieur à 30 %.

On notera que les copolymères selon l'invention peuvent avantageusement présenter en combinaison, d'une part, une masse moléculaire Mn égale ou supérieure à 40 000 g/mol et, d'autre part, un taux molaire d'unités issues du butadiène égal ou supérieur à 15 %, voire égal ou supérieur à 20 % et même égal ou supérieur à 30 %.

On notera également que les copolymères selon l'invention peuvent avantageusement présenter en combinaison, d'une part, une masse Mn égale ou supérieure à 100 000 g/mol et, d'autre part, un taux molaire desdites unités égal ou supérieur à 15 %, voire égal ou supérieur à 20 %.

On notera également que les copolymères selon l'invention peuvent avantageusement présenter en combinaison, d'une part, une masse Mn égale ou supérieure à 200 000 g/mol et, d'autre part, un taux molaire desdites unités égal ou supérieur à 15 %, voire égal ou supérieur à 20 %.

On notera en outre que les copolymères selon l'invention peuvent avantageusement présenter en combinaison, d'une part, une masse Mn égale ou supérieure à 300 000 g/mol et, d'autre part, un taux molaire desdites unités égal ou supérieur à 15 %, voire égal ou supérieur à 20 %.

Selon une autre caractéristique de l'invention, les copolymères selon l'invention présentent un indice de polymolécularité Ip qui est inférieur à 3,5. De préférence, l'indice Ip desdits copolymères est inférieur ou égal à 3 et, à titre encore plus préférentiel, cet indice Ip est inférieur ou égal à 2,5. A l'instar des masses moléculaires Mn, les indices de polymolécularité Ip ont été déterminés dans la présente demande par chromatographie d'exclusion par la taille (technique SEC décrite à l'annexe jointe).

Les copolymères selon l'invention présentent de préférence une température de transition vitreuse Tg qui est inférieure à -10° C. Plus précisément, ces copolymères peuvent par exemple présenter une température Tg comprise entre -20° C et -50° C.

Cette température Tg est mesurée dans la présente demande par la technique « DSC » (Differential Scanning Calorimetry) sur un appareil de dénomination « Setaram DSC 131 ». Le programme de température utilisé correspond à une montée en température de -120° C à 150° C à la vitesse de 10 °C / min.

Les copolymères de l'invention présentent les caractéristiques de microstructure suivantes :
enchaînements trans-1,4 ; 1,2 (vinyliques) et trans-1,2 cyclohexane.

Plus précisément, si l'on utilise à titre de complexe organométallique un complexe non ponté répondant à ladite formule générique A et comprenant deux groupes fluorényle, ce complexe répondant alors de préférence à la formule (C₁₃H₉)₂NdCl, alors le butadiène sera majoritairement inséré dans la chaîne du copolymère par des enchaînements trans-1,4 (i.e. les unités issues du butadiène comprennent des enchaînements trans-1,4 selon une fraction molaire supérieure à 50 %, typiquement supérieure à 70 %).

Mais si, selon un mode préférentiel de réalisation de l'invention, on utilise à titre de complexe organométallique un complexe ponté répondant à ladite formule générique B et comprenant deux groupes fluorényle, ce complexe répondant alors de préférence à la formule [(C₁₃H₈)₂SiMe₂]NdCl, alors le copolymère selon l'invention sera tel que ses unités issues du butadiène comprennent des enchaînements sous forme de trans-1,2 cyclohexane selon une fraction molaire égale ou supérieure à 10 %, avantageusement égale ou supérieure à 20 % et, à titre encore plus avantageux, supérieure à 50 %.

Un système catalytique selon l'invention pour l'obtention desdits copolymères comprend :
(i) ledit complexe organométallique représenté par l'une des formules suivantes A ou B: 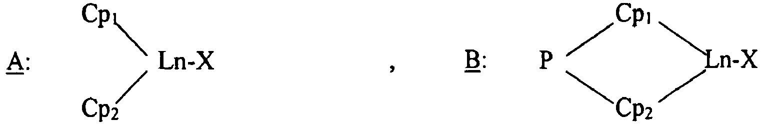 où Ln est un lanthanide de numéro atomique allant de 57 à 71, de préférence le néodyme,
   où X représente un halogène pouvant être le chlore, le fluor, le brome ou l'iode,
   où, dans la formule A, sont reliées à Ln deux molécules de ligands Cp₁ et Cp₂ identiques ou différentes, constituées chacune d'un groupe fluorényle substitué ou non,
   où, dans la formule B, est reliée à Ln une molécule de ligand constituée de deux groupes fluorényle Cp₁ et Cp₂ identiques ou différents, substitués ou non et reliés entre eux par un pont P de formule MR₂, où M est un élément de la colonne IVA, de préférence le silicium, et R un groupe alkyle ayant de 1 à 20 atomes de carbone, et
(ii) un co-catalyseur appartenant au groupe constitué par le butyloctyl magnésium et le chlorure de butyl magnésium
   et ce système catalytique selon l'invention est tel que le rapport molaire (co-catalyseur/ complexe organométallique) appartient à un domaine allant de 1 à 8.

De préférence, ledit rapport molaire (co-catalyseur/ complexe organométallique) appartient à un domaine allant de 1 à 3, pour la synthèse de copolymères présentant à la fois une masse moléculaire Mn égale ou supérieure à 100 000 g/mol et un taux molaire d'unités issues du butadiène qui est égal ou supérieur à 8 %.

Selon un exemple préférentiel de réalisation de l'invention, Cp₁ et Cp₂ comprennent chacun un même groupe fluorényle non substitué.

Si la formule A s'applique, alors Cp₁ et Cp₂ sont chacun constitués d'un groupe fluorényle de formule C₁₃H₉, et le complexe organométallique répond à la formule (C₁₃H₉)₂NdCl.

Si la formule B s'applique, alors Cp₁ et Cp₂ sont chacun constitués d'un groupe fluorényle de formule C₁₃H₈, et le complexe organométallique répond à la formule [(C₁₃H₈)₂SiMe₂]NdCl

D'une manière générale, si l'on a Cp₁=Cp₂=Cp, un complexe organométallique non ponté selon l'invention répondant à ladite formule générique A est préparé :
- dans une étape (1), en faisant réagir avec un alkyl lithium une molécule hydrogénée de ligand, représentée par la formule HCp, pour obtenir un sel de lithium, puis
- dans une étape (2), en faisant réagir dans un solvant complexant ledit sel avec un trihalogénure anhydre d'un lanthanide qui est représenté par la formule LnX₃, où X représente un halogène pouvant être le chlore, le fluor, le brome, ou l'iode, puis
- dans une étape (3), en évaporant ce solvant complexant, puis en procédant dans un solvant non complexant à l'extraction du produit obtenu au terme de la seconde étape, et éventuellement,
- dans une étape (4), en procédant à la cristallisation du produit extrait au terme de ladite troisième étape, pour obtenir ledit complexe organométallique de formule A totalement exempt dudit solvant complexant.

Egalement d'une manière générale, si l'on a Cp₁=Cp₂=Cp, un complexe organométallique ponté selon l'invention répondant à ladite formule générique B est préparé :
- dans une étape (1a), en faisant réagir avec un alkyl lithium une molécule hydrogénée de ligand, représentée par la formule HCp, pour obtenir un composé de lithium, puis
- dans une étape (1b), en faisant réagir dans un solvant complexant le composé de lithium obtenu à l'étape (la) avec un dihalogénure dudit pont de formule MR₂, par exemple de formule SiMe₂Cl₂ (où Me est un groupe méthyle), pour obtenir un composé de formule MR₂Cp₂, puis
- dans une étape (1c), en faisant réagir dans un solvant non complexant le composé obtenu à l'étape (1b) avec un alkyl lithium, pour obtenir un sel de lithium de formule MR₂Cp₂Li₂, puis
- dans une étape (2), en faisant réagir dans un solvant complexant ledit sel avec un trihalogénure anhydre d'un lanthanide qui est représenté par la formule LnX₃, où X représente un halogène pouvant être le chlore, le fluor, le brome, ou l'iode, puis
- dans une étape (3), en évaporant ce solvant complexant, puis en procédant dans un solvant non complexant à l'extraction du produit obtenu au terme de la seconde étape, et éventuellement,
- dans une étape (4), en procédant à la cristallisation du produit extrait au terme de ladite troisième étape, pour obtenir ledit complexe organométallique de formule B totalement exempt dudit solvant complexant.

Pour lesdites étapes (1) et (la), (1c), on utilise de préférence le butyl lithium à titre d'alkyl lithium.

Pour lesdites étapes (2) et (1b), on utilise de préférence le tétrahydrofurane à titre de solvant complexant. De plus, on fait réagir avantageusement deux moles dudit sel de lithium avec une ou deux moles dudit trihalogénure de lanthanide.

Pour lesdites étapes (3) et (1c), on utilise de préférence le toluène ou l'heptane à titre de solvant non complexant.

Ledit co-catalyseur appartient au groupe constitué par le butyloctyl magnésium et le chlorure de butyl magnésium et, à titre encore plus préférentiel, ce co-catalyseur est le butyloctyl magnésium.

Le procédé de synthèse des copolymères selon l'invention comprend la réaction en suspension ou en solution, dans un solvant hydrocarboné, tel que le toluène, et à une température comprise entre -20° C et 120° C, du système catalytique selon l'invention en présence d'éthylène et de butadiène.

Cette réaction est réalisée dans une réacteur sous une pression variable, de préférence allant de 3 bars à 50 bars, et de préférence à une température comprise entre 20° C et 90° C.

La concentration en lanthanide du milieu réactionnel est avantageusement inférieure à 0,3 mmol/l. Quant à la fraction molaire de butadiène dans ce milieu réactionnel, elle est avantageusement comprise entre 5 % et 80 %.

Les caractéristiques précitées de la présente invention, ainsi que d'autres, seront mieux comprises à la lecture de la description suivante de plusieurs exemples de réalisation de l'invention, donnés à titre illustratif et non limitatif.
- Pour tous les exemples suivants, on a opéré sous argon et on a préalablement séché les solvants utilisés par réaction avec du sodium suivie d'une distillation, ou bien sur un tamis moléculaire de 3 Å sous balayage d'argon.
- On a déterminé la microstructure de chaque copolymère obtenu dans ces exemples par les techniques de RMN¹H et de RMN¹³C. On a utilisé à cet effet un spectromètre de dénomination « BRUKER DRX 400 », à des fréquences de 400 MHz pour la technique de RMN¹H et de 100,6 MHz pour celle de RMN¹³C. On se reportera à l'article « Investigation of ethylene/ butadiene copolymers microstructure by 1H and 13C NMR, Macromolecules 2001, 34, 6304-6311 », pour une description détaillée de ces techniques de RMN¹H et de RMN¹³C utilisées dans les exemples.

| |
|---|
| **Première série d'essais de copolymérisation « témoin » et selon l'invention :** |

On a utilisé pour ces essais des systèmes catalytiques « témoin » et selon l'invention comprenant, d'une part, un même complexe organométallique selon l'invention incluant des groupes fluorényle et, d'autre part, différents co-catalyseurs également selon l'invention, mais en faisant varier le rapport molaire (co-catalyseur/ complexe organométallique).

### 1) Complexe organométallique utilisé :

On a utilisé le chloro (µ-diméthylsilyl)bis(η5-fluorényl) néodyme, de formule [(C₁₃H₈)₂SiMe₂]NdCl, et ce complexe a été préparé de la manière suivante.

### a) Synthèse d'un composé de formule Me₂Si(C₁₃H₉)₂:

A une solution de 13 mmol de C₁₃H₉Li (obtenu par réaction de fluorène (C₁₃H₁₀) et de butyllithium (BuLi)) dans 100 mL de THF (tétrahydrofurane), qui est refroidie à -20° C, sont ajoutés 6,5 mmol de SiMe₂Cl₂. Après retour à la température ambiante, la solution orangée obtenue est agitée pendant 15 heures. Le THF est évaporé et le résidu est repris au toluène. Le sel (LiCl) est filtré puis le filtrat est évaporé. On obtient un solide orangé qui est lavé à froid par de petites quantités d'heptane. Puis le fluorène résiduel est sublimé à 85° C sous vide et séparé du produit, ce qui permet d'isoler ledit composé de formule Me₂Si(C₁₃H₉)₂.

L'analyse élémentaire de ce composé donne :
% C = 86,43 ; % H = 5,98 (en théorie, % C = 86,55 et % H = 6,22).

On a procédé à la caractérisation de ce composé par RMN ¹H à 300 MHz (CDCl₃), en notant les massifs observés (valeurs de δ (ppm) dont l'intégrale correspond à un nombre de protons) :
- 0,59 ppm pour (SiMe₂, 6H) ; 4,21 ppm pour (CH-(C₁₃H₉), 2H) ; 7,23 ppm pour (4H) / 7,32 ppm pour (4H) / 7,47 ppm pour (4H) / 7,83 ppm pour (4H) (CH = (C₁₃H₉), 16H).

### b) Synthèse d'un sel de formule Me₂Si(C₁₃H₈)₂Li₂:

A une solution de 4 mmol dudit composé de formule Me₂Si(C₁₃H₉)₂ dans 100 mL de toluène qui est refroidie à -20° C, est ajoutée une solution de 8 mmol de BuLi. Après retour à la température ambiante, la solution rouge obtenue est agitée pendant 15 heures, puis pendant 3 heures à reflux. Un solide jaune précipite. Le toluène est évaporé puis le solide obtenu est lavé à froid par de petites quantités d'heptane et séché. Un solide jaune correspondant au sel de formule Me₂Si(C₁₃H₈)₂Li₂ est ainsi recueilli (avec un rendement de 85 %).

### c) Synthèse du complexe organométallique de formule [(C₁₃H₈)₂SiMe₂]NdCl:

3,6 mmol de NdCl₃ sont agités à reflux dans 75 mL de THF pendant 12 heures. Puis une solution dudit sel de formule Me₂Si(C₁₃H₈)₂Li₂ (3,9 mmol) est ajoutée. La solution marron obtenue est ensuite agitée une nuit à reflux du THF. Le solvant est évaporé et le résidu est repris au toluène. Le solide formé (LiCl) est filtré. Le toluène est évaporé pour donner un solide marron correspondant au complexe organométallique de formule [(C₁₃H₈)₂SiMe₂]NdCl.

### 2) Essais 1 et 2 de copolymérisation selon l'invention :

On a réalisé deux essais de copolymérisation correspondant chacun à l'introduction, dans un réacteur contenant 300 mL de toluène, dudit complexe organométallique [(C₁₃H₈)₂SiMe₂]NdCl en quantité massique x (mg) déterminée, d'un mélange éthylène-butadiène dont la fraction molaire en butadiène y (%) est variable et d'un co-catalyseur constitué de butyloctylmagnésium (BOMAG).

Pendant la copolymérisation, la pression interne du réacteur a été maintenue à environ 4 bars et la température du réacteur a été maintenue à 80° C.

Après un temps t (min.) de réaction, la copolymérisation est stoppée par refroidissement et dégazage du réacteur, puis le copolymère est obtenu par précipitation dans du méthanol. Après séchage, on obtient une masse m (g) de copolymère.

Le co-catalyseur a été utilisé selon un rapport molaire (co-catalyseur / néodyme) égal à 2. On a déterminé pour chaque copolymère d'éthylène et de butadiène obtenu :
- le taux molaire τ (%) d'unités issues du butadiène dans le copolymère,
- la température de transition vitreuse Tg de ce copolymère,
- la microstructure des unités butadiène insérées dans la chaîne de copolymère, et
- la masse moléculaire Mn et l'indice de polymolécularité Ip de ce copolymère.

Le tableau 1 ci-après contient les données relatives à chaque essai de copolymérisation et à chaque copolymère synthétisé.

**Tableau 1 :**

| **essais** | **x** | **Co-catalyseur et rapport (co-catalyseur/néodyme)** | **m** | **t** | | **y(%) butadiène dans monomères** |
|---|---|---|---|---|---|---|
| | **(mg)** | | **(g)** | **(min)** | | |
| **N°1** | 39,5 | BOMAG (2/1) | 12,7 | 420 | | 20 |
| **N°2** | 33,6 | BOMAG (2/1) | 9,2 | 180 | | 30 |

| **essais** | | **Tg** | **Insertion du butadiène** | | | **Mn (g/mol)** / **Ip** |
|---|---|---|---|---|---|---|
| | **τ (%) butadiène dans copolymère** | **(°C)** | **% 1,2** | **% trans-14** | **% trans-1,2 cyclohexane** | |
| **N°1** | 13,1 | -31,2 | 27,2 | 20,4 | 52,4 | 147 500 / 3,1 |
| **N°2** | 15,0 | -34,0 | 22,9 | 25,8 | 51,3 | 127 700 / 3,0 |

Ces résultats montrent que les systèmes catalytiques selon ces essais 1 et 2, qui sont notamment caractérisés par l'utilisation de groupes fluorényle dans les complexes organométalliques et par un rapport molaire (co-catalyseur/ néodyme) inférieur à 8, permettent d'obtenir des copolymères d'éthylène et de butadiène présentant un taux molaire d'unités issues du butadiène supérieur à 10 %, une fraction molaire d'enchaînements trans-1,2 cyclohexane dans ces unités supérieure à 50 %, une masse Mn supérieure à 100 000 g/mol et un indice Ip inférieur à 3,5.

### 3) Essais comparatifs de copolymérisation 3 et 4 :

On a réalisé deux essais comparatifs 3 et 4 avec le même complexe organométallique en procédant comme pour les essais 1 et 2, à ceci près que le rapport molaire (co-catalyseur/ néodyme) a été choisi égal à 20.

On a utilisé un co-catalyseur constitué de chlorure de butylmagnésium (BuMgCl) pour l'essai 3 et de butyloctylmagnésium (BOMAG) pour l'essai 4.

A l'instar du tableau 1, le tableau 2 ci-après contient les données relatives à chaque essai de copolymérisation et à chaque copolymère synthétisé.

**Tableau 2 :**

| **essais** | **x** | **Co-catalyseur et rapport (co-catalyseur/néodyme)** | **m** | **t** | | **y (%) butadiène 1 dans monomères** |
|---|---|---|---|---|---|---|
| | **(mg)** | | **(g)** | **(min)** | | |
| **N°3** | 23,1 | BuMgCl (20/1) | 4,2 | 60 | | 20 |
| **N°4** | 39,7 | BOMAG (20/1) | 13,2 | 180 | | 20 |

| **essais** | | **Tg** | **Insertion du butadiène** | | | **Mn (g/mol)** / **Ip** |
|---|---|---|---|---|---|---|
| | **τ (%) butadiène dans copolymère** | **(° C)** | **% 1,2** | **% trans-1,4** | **% trans-1,2 cyclohexane** | |
| **N°3** | 11,8 | non mesurée | 19,4 | 23,0 | 57,6 | 10 000 / 1,2 |
| **N°4** | 11,0 | -28,5 | 21,8 | 24,6 | 53,5 | 7 800 / 1,5 |

Ces résultats montrent que les systèmes catalytiques selon ces essais comparatifs 3 et 4, qui sont caractérisés par l'utilisation de groupes fluorényle dans les complexes organométalliques mais par un rapport molaire (co-catalyseur/ néodyme) non conforme à l'invention qui est égal à 20, ne permettent pas d'obtenir des copolymères d'éthylène et de butadiène présentant à la fois un taux molaire d'unités issues du butadiène d'au moins 8 % et une masse moléculaire Mn d'au moins 50 000 g/mol (les copolymères obtenus présentant une masse Mn au plus égale à 10 000 g/mol).

### 4) Essais 5 à 9 de copolymérisation selon l'invention :

On a réalisé cinq autres essais de copolymérisation correspondant chacun à l'introduction, dans un réacteur contenant 200 mL de toluène, dudit complexe [(C₁₃H₈)₂SiMe₂]NdCl en quantité massique x (mg) déterminée et d'un co-catalyseur constitué de chlorure de butyloctylmagnésium (BOMAG) avec un rapport (co-catalyseur/ néodyme) égal à 2, puis d'une solution de butadiène obtenue par solubilisation dans 400 mL de toluène d'une masse z (g) de butadiène.

La pression interne souhaitée P du réacteur est ensuite fixée par ajout d'éthylène (pression de 20 bars pour l'essai 5 et de 10 bars pour les essais 6 à 9) et la température du réacteur est portée à 80° C pour les essais 5 à 8 et à 60° C pour l'essai 9.

L'alimentation d'éthylène est ensuite coupée, et la température du réacteur est maintenue à 80° C ou à 60° C pendant la copolymérisation, selon le cas.

Après un temps t (min.) de réaction, la copolymérisation est stoppée par refroidissement et dégazage du réacteur, puis le copolymère est obtenu par précipitation dans du méthanol. Après séchage, on obtient une masse m (g) de copolymère.

Le tableau 3 ci-après contient les données relatives à chaque essai 5 à 9 et à chaque copolymère synthétisé.

**Tableau 3 :**

| | **x** | **Masse butadiène z** | **P** | **T** | **m** | | **t** |
|---|---|---|---|---|---|---|---|
| **essais** | **(mg)** | **(g)** | **(bar)** | **(°**C) | **(g)** | | **(min)** |
| **N° 5** | 44,9 | 16 | 20 | 80 | 21,7 | | 60 |
| **N**° **6** | 47,2 | 18 | 10 | 80 | 15,8 | | 150 |
| **N° 7** | 46,3 | 7 | 10 | 80 | 11,4 | | 60 |
| **N° 8** | 22,0 | 8 | 10 | 80 | 5,9 | | 180 |
| **N° 9** | 40,6 | 10 | 10 | 60 | 15,8 | | 150 |

| | | **Tg** | **Insertion du butadiène** | | | | **Mn (g/mol) / Ip** |
|---|---|---|---|---|---|---|---|
| **essais** | **τ(%) butadiène copolymère** | **(° C)** | **% 1,2** | | **% trans-1,4** | **% trans-1,2 cyclohexane** | |
| **N° 5** | 20,4 | -43,8 | 55,0 | | 25,0 | 20,0 | 260 000 / 1,8 |
| **N° 6** | 30,4 | -45,8 | 53,5 | | 27,8 | 18,7 | 70 700 / 2,0 |
| **N° 7** | 19,7 | -42,8 | 45,5 | | 25,2 | 29,3 | 73 200 / 1,9 |
| **N° 8** | 20,0 | -43,2 | 44,5 | | 26,7 | 28,8 | 378600/2,8 |
| **N° 9** | 23,6 | -47,6 | 57,0 | | 22,7 | 20,3 | 801 450 / 1,9 |

Ces résultats montrent que les systèmes catalytiques selon ces essais 5 à 9 de l'invention, qui sont notamment caractérisés par l'utilisation de groupes fluorényle dans les complexes organométalliques, par un rapport molaire (co-catalyseur/ néodyme) égal à 2 et par une pression dans le réacteur égale ou supérieure à 10 bars, permettent d'obtenir des copolymères d'éthylène et de butadiène présentant à la fois un taux molaire d'unités issues du butadiène supérieur à 15 %, une fraction molaire d'enchaînements trans-1,2 cyclohexane dans ces unités supérieure à 15 %, une masse moléculaire Mn supérieure à 50 000 g/mol.

On notera que les copolymères obtenus aux essais 5, 8 et 9 présentent avantageusement une masse Mn supérieure à 200 000 g/mol, voire à 300 000 g/mol, et un indice Ip inférieur à 3,0.

| |
|---|
| **Seconde série d'essais « témoin » de copolymérisation :** |

Pour ces essais « témoin », on a utilisé des systèmes catalytiques comprenant, d'une part, un complexe organométallique « témoin » incluant des groupes cyclopentadiényle et, d'autre part, différents co-catalyseurs selon l'invention, en faisant varier le rapport molaire (co-catalyseur/ complexe organométallique).

### 1) Complexe organométallique utilisé :

On a utilisé le chloro (µ-diméthylsilyl)bis(η5-triméthylsilylcyclopentadiényl) néodyme de formule {[(C₅H₃)SiMe₃]₂SiMe₂}NdCl, que l'on a préparé comme suit.

### a) Synthèse d'un composé de formule [(C₅H₄)SiMe₃]₂SiMe₂:

On introduit dans un tube de Schlenk 16 mmol d'un composé de formule Li[(C₅H₄)SiMe₃], 8 mmol de Me₂SiCl₂ et 80 mL de THF. On agite l'ensemble pendant une nuit et à température ambiante. Le solvant est évaporé et le résidu est repris avec 40 mL d'heptane. La solution est filtrée et le solvant est évaporé. Le produit finalement obtenu est une huile visqueuse répondant à la formule précitée pour ledit composé.

### b) Synthèse d'un sel de formule [(C₅H₃)SiMe₃]₂SiMe₂Li₂:

Dans un tube de Schlenk qui contient une solution de THF comprenant 7 mmol dudit composé de formule [(C₅H₄)SiMe₃]₂SiMe₂, on ajoute progressivement et à 0° C 14 mmol de BuLi. On agite l'ensemble à température ambiante pendant 6 heures et on obtient le sel précité en solution dans le THF.

### c) Synthèse du complexe organométallique de formule {[(C₅H₃)SiMe₃]SiMe₂}NdCl:

On agite à reflux et pendant une nuit 4 mmol de NdCl₃ anhydre dans du THF. On ajoute ensuite 4 mmol dudit sel de formule [(C₅H₃)SiMe₃]₂SiMe₂Li₂ en solution dans du THF. Puis on agite l'ensemble pendant 36 heures à température ambiante. Le solvant est évaporé et le résidu est repris au toluène. La solution est filtrée puis le produit est cristallisé à -20° C. On obtient ainsi ledit complexe organométallique.

L'analyse élémentaire centésimale de ce complexe donne les pourcentages suivants pour les atomes de carbone et d'hydrogène:
% C = 42,88 et % H = 5,87 (en théorie : % C = 42,36 et % H = 5,92).

On a procédé à la caractérisation de ce complexe par RMN ¹H à 300 MHz (C₆D₆) en notant les massifs observés (valeurs de δ (ppm) dont l'intégrale correspond à un nombre de protons) :

On observe par cette technique deux massifs dont chaque intégrale correspond à 3 protons: un premier massif à 2,13 ppm et un second massif à -8,97 ppm sont chacun représentatifs des protons de Si(CH₃)₂ de ce complexe.

On observe enfin un massif à -2,99 ppm, dont l'intégrale correspond à 18 protons et qui est représentatif des protons des deux substituants Si(CH₃)₃ dudit complexe.

On notera que les pics correspondant aux protons de C₅H₃ ne sont pas détectés, probablement du fait que ces pics sont très larges.

### 2) Essais de copolymérisation « témoin » 10 et 11 :

On a réalisé deux premiers essais « témoin » correspondant à l'introduction, dans un réacteur contenant 300 mL de toluène, dudit complexe organométallique de formule {[(C₅H₃)SiMe₃]₂SiMe₂}NdCl en quantité x (mg) déterminée, d'un mélange éthylène-butadiène dont la fraction molaire y (%) de butadiène est variable et d'un co-catalyseur. Ce dernier est constitué d'un mélange de butyllithium (BuLi) et d'hydrure de diisobutylaluminium (HDiBA), avec un rapport (co-catalyseur/ néodyme) non conforme à l'invention qui est égal à 20/1.

La pression interne du réacteur a été maintenue à environ 4 bars. La température du réacteur de polymérisation a été maintenue à 80° C ou 60 °C pendant la polymérisation (pour les essais 10 ou 11, respectivement).

Après un temps t (min.) de réaction, la copolymérisation est stoppée par refroidissement et dégazage du réacteur, puis le copolymère est obtenu par précipitation dans du méthanol. Après séchage, on obtient une masse m (g) de copolymère.

Le tableau 4 ci-après contient les données relatives à chaque essai 10, 11 et à chaque copolymère synthétisé.

**Tableau 4 :**

| **essais** | **x** | **Rapport (BuLi/HDiBA/néodyme)** | **P** | **T** | **m** | **t** |
|---|---|---|---|---|---|---|
| | **(mg)** | | **(bar)** | **(°C)** | **(g)** | **(min)** |
| **N° 10** | 30 | 10/10/1 | 4 | 80 | 4,8 | 120 |
| **N° 11** | 31 | 10/10/1 | 4 | 60 | 2,1 | 60 |

| **essais** | **y (%) butadiène dans monomères** | **τ (%) butadiène dans copolymère** | **Insertion du butadiène** | | | **Mn (g/mol) / Ip** |
|---|---|---|---|---|---|---|
| | | | **% 1,2** | | **% trans-1,4** | |
| **N° 10** | 43,0 | 41,0 | 2,5 | | 97,5 | 6 900 / 2,2 |
| **N° 11** | 40,0 | 37,5 | 2,5 | | 97,5 | 10 530 / 1,8 |

Ces résultats montrent que les systèmes catalytiques selon ces essais « témoin » 10 et 11, qui sont notamment caractérisés par l'utilisation de groupes cyclopentadiényle dans les complexes organométalliques, ne permettent pas d'obtenir des copolymères d'éthylène et de butadiène présentant des enchaînements trans-1,2 cyclohexane.

De plus, le rapport molaire (co-catalyseur/ néodyme) égal à 20 qui est utilisé ne permet pas d'obtenir pour ces copolymères une masse moléculaire Mn d'au moins 40 000 g/mol.

### 3) Essai de copolymérisation « témoin » 12 :

On a procédé comme pour l'essai « témoin » 11 précité, à ceci près que le système catalytique de cet essai 12 est caractérisé par l'utilisation d'un co-catalyseur constitué uniquement de butyllithium et par un rapport (co-catalyseur/ néodyme) conforme à l'invention qui est égal à 2.

Le tableau 5 ci-après contient les données relatives à cet essai 12 et au copolymère obtenu.

**Tableau 5 :**

| **essai** | **x** | **Rapport (co-catalyseur/néodyme)** | **P** | **T** | **m** | **t** |
|---|---|---|---|---|---|---|
| | **(mg)** | | **(bar)** | **(°C)** | **(g)** | **(min)** |
| **N° 12** | 55 | 2/1 | 4 | 60 | 2,3 | 240 |

| **essai** | **y (%) butadiène dans monomères** | **τ (%) butadiène dans copolymère** | **Insertion du butadiène** | | | **Mn (g/mol) / Ip** |
|---|---|---|---|---|---|---|
| | | | **% 1,2** | | **% trans-1,4** | |
| **N° 12** | 40,0 | 40,2 | 2,3 | | 97,7 | 44 600 / 1,8 |

Ces résultats montrent que le système catalytique « témoin » de l'essai 12, bien qu'il soit caractérisé par un rapport molaire (co-catalyseur/ néodyme) conforme à l'invention qui est égal à 2, ne permet pas d'obtenir un copolymère d'éthylène et de butadiène présentant des enchaînements trans-1,2 cyclohexane, du fait qu'il est caractérisé par l'utilisation de groupes cyclopentadiényle dans les complexes organométalliques.

### ANNEXE :

### Détermination de la distribution des masses moléculaires des copolymères obtenus par la technique de chromatographie d'exclusion par la taille (SEC).

### a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier. Sans être une méthode absolue, la SEC permet d'appréhender la distribution des masses moléculaires d'un polymère.

A partir de produits étalons commerciaux constitués de polystyrène (masses moyennes en nombre Mn de 580 g/mol à 3 150 000 g/mol), les différentes masses Mn et Mw peuvent être déterminées et l'indice de polymolécularité calculé (Ip = Mw/Mn).

Plus précisément, les échantillons de polystyrène utilisés présentent les masses Mn suivantes (en g/mol) : 580 -1 700 - 2 960 - 28 500 - 66 000 - 170 600 - 526 000 - 1 290 000 - 3 150 000.

### b) Préparation du polymère:

Il n'y a pas de traitement particulier de l'échantillon de polymère avant analyse. Celui-ci est simplement solubilisé dans du tétrahydrofurane à une concentration d'environ 1 g/l.

### c) Analyse SEC:

L'appareillage utilisé est un chromatographe « WATERS » de caractéristiques « 515 HPLC » (pompe) et « RI 410 » (détecteur).

Le solvant d'élution est le tétrahydrofurane et la vitesse d'élution de 1 mL/min.

On utilise un jeu de trois colonnes, dont une colonne de dénomination « WATERS STYRAGEL HR 4E » et deux colonnes de dénomination « WATERS STYRAGEL HR 5E ».

La température des colonnes est de 45° C et celle du détecteur de 40° C.

Le volume injecté de la solution de l'échantillon de polymère est 50 µl. Le détecteur est un réfractomètre différentiel « WATERS 2140 » et le logiciel d'exploitation des données chromatographiques est le système « WATERS MILLENIUM ».

## Revendications

1. Système catalytique utilisable pour la synthèse d'un copolymère d'éthylène et de butadiène, ledit système catalytique comprenant :
(i) un complexe organométallique représenté par l'une des formules suivantes A ou B : 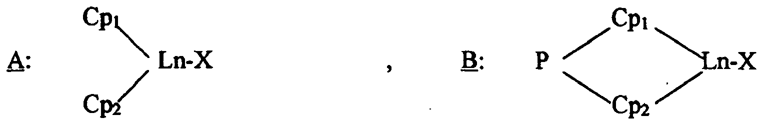 où Ln représente un métal d'un lanthanide dont le numéro atomique peut aller de 57 à 71,
où X représente un halogène pouvant être le chlore, le fluor, le brome ou l'iode, où, dans la formule A, sont reliées audit métal Ln deux molécules de ligands Cp₁ et Cp₂ identiques ou différentes, constituées chacune d'un groupe fluorényle qui est substitué ou non,
où, dans la formule B, est reliée audit métal Ln une molécule de ligand, constituée de deux groupes fluorényle Cp₁ et Cp₂ identiques ou différents qui sont substitués ou non et qui sont reliés entre eux par un pont P répondant à la formule MR₂, où M est un élément de la colonne IVA de la classification périodique de Mendeleev, et où R est un groupe alkyle comprenant de 1 à 20 atomes de carbone, et
(ii) un co-catalyseur appartenant au groupe constitué par le butyloctyl magnésium et le chlorure de butyl magnésium,
**caractérisé en ce que** le rapport molaire (co-catalyseur/ complexe organométallique) appartient à un domaine allant de 1 à 8.

2. Système catalytique selon la revendication 1, **caractérisé en ce que** ledit rapport molaire (co-catalyseur/ complexe organométallique) appartient à un domaine allant de 1 à 3.

3. Système catalytique selon la revendication 1 ou 2, **caractérisé en ce que** ledit complexe organométallique est représenté par ladite formule générique A.

4. Système catalytique selon la revendication 1 ou 2, **caractérisé en ce que** ledit complexe organométallique est représenté par ladite formule générique B.

5. Système catalytique selon la revendication 4, **caractérisé en ce que** ledit métal M compris dans ledit pont P de formule MR₂ est le silicium.

6. Système catalytique selon une des revendications 1 à 5, **caractérisé en ce que**, dans ledit complexe organométallique, ledit lanthanide Ln est le néodyme.

7. Système catalytique selon une des revendications 1 à 6, **caractérisé en ce que** dans ledit complexe organométallique, Cp₁ et Cp₂ comprennent chacun un même groupe fluorényle.

8. Système catalytique selon les revendications 3 et 7, **caractérisé en ce que** ledit complexe organométallique répond à la formule (C₁₃H₉)₂NdCl, où Cp₁ et Cp₂ sont chacun constitués d'un groupe fluorényle non substitué qui répond à la formule C₁₃H₉, pour la synthèse d'un copolymère d'éthylène et de butadiène dont les unités issues du butadiène comprennent des enchaînements trans-1,4 selon une fraction molaire supérieure à 50 %.

9. Système catalytique selon les revendications 4 et 7, **caractérisé en ce que**, dans ledit complexe organométallique, Cp₁ et Cp₂ sont chacun constitués d'un groupe fluorényle non substitué qui répond à la formule C₁₃H₈.

10. Système catalytique selon les revendications 5 et 9, **caractérisé en ce que** ledit complexe organométallique répond à la formule [(C₁₃H₈)₂SiMe₂]NdCl, pour la synthèse d'un copolymère d'éthylène et de butadiène dont les unités issues du butadiène comprennent des enchaînements trans-1,2 cyclohexane selon une fraction molaire égale ou supérieure à 10 %.

11. Procédé de synthèse d'un copolymère d'éthylène et de butadiène de masse moléculaire moyenne en nombre Mn égale ou supérieure à 40 000 g/mol comprenant un taux molaire d'unités issues du butadiène égal ou supérieur à 8 % comprenant des enchaînements sous forme de trans-1,2 cyclohexane, comprenant la réaction en suspension ou en solution, dans un solvant hydrocarboné, tel que le toluène, et à une température comprise entre -20° C et 120° C, d'un système catalytique en présence de l'éthylène et du butadiène, **caractérisé en ce que** ledit système catalytique est tel que défini à l'une des revendications 2 à 10.

12. Procédé de synthèse d'un copolymère d'éthylène et de butadiène selon la revendication 11, **caractérisé en ce que** ladite réaction est réalisée sous une pression appartenant à un domaine allant de 3 à 50 bars.

## Patentansprüche

1. Katalytisches System, das für die Synthese eines Copolymers von Ethylen und Butadien verwendet werden kann und Folgendes umfasst:
(i) einen metallorganischen Komplex, der durch eine der folgenden Formeln A oder B wiedergegeben wird: 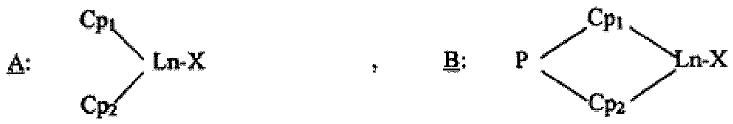 wobei Ln für ein Lanthanidmetall mit einer Ordnungszahl von 57 bis 71 steht,
wobei X für ein Halogen, bei dem es sich um Chlor, Fluor, Brom oder Iod handeln kann, steht,
wobei in der Formel A an das Metall Ln zwei gleiche oder verschiedene Ligandenmoleküle Cp₁ und Cp₂ gebunden sind, die jeweils aus einer gegebenenfalls substituierten Fluorenylgruppe bestehen,
wobei in der Formel B an das Metall Ln ein Ligandenmolekül gebunden ist, das aus zwei gleichen oder verschiedenen Fluorenylgruppen Cp₁ und Cp₂ besteht, die gegebenenfalls substituiert sind und über eine Brücke P der Formel MR₂, wobei M für ein Element der Spalte IV A des Periodensystems von Mendelejew steht und R für eine Alkylgruppe mit 1 bis 20 Kohlenstoffatomen steht, miteinander verbunden sind, und
(ii) einen Cokatalysator aus der Gruppe bestehend aus Butyloctylmagnesium und Butylmagnesiumchlorid, **dadurch gekennzeichnet, dass** das Molverhältnis (Cokatalysator/metallorganischer Komplex) im Bereich von 1 bis 8 liegt.

2. Katalytisches System nach Anspruch 1, **dadurch gekennzeichnet, dass** das Molverhältnis (Cokatalysator/metallorganischer Komplex) im Bereich von 1 bis 3 liegt.

3. Katalytisches System nach Anspruch 1 oder 2, **dadurch gekennzeichnet, dass** der metallorganische Komplex durch die allgemeine Formel A wiedergegeben wird.

4. Katalytisches System nach Anspruch 1 oder 2, **dadurch gekennzeichnet, dass** der metallorganische Komplex durch die allgemeine Formel B wiedergegeben wird.

5. Katalytisches System nach Anspruch 4, **dadurch gekennzeichnet, dass** es sich bei dem Element M in der Brücke P der Formel MR₂ um Silicium handelt.

6. Katalytisches System nach einem der Ansprüche 1 bis 5, **dadurch gekennzeichnet, dass** es sich bei dem Lanthanid Ln in dem metallorganischen Komplex um Neodym handelt.

7. Katalytisches System nach einem der Ansprüche 1 bis 6, **dadurch gekennzeichnet, dass** in dem metallorganischen Komplex Cp₁ und Cp₂ jeweils eine identische Fluorenylgruppe umfassen.

8. Katalytisches System nach den Ansprüchen 3 und 7, **dadurch gekennzeichnet, dass** der metallorganische Komplex die Formel (C₁₃H₉)₂NdCl aufweist, wobei Cp₁ und Cp₂ jeweils aus einer unsubstituierten Fluorenylgruppe der Formel C₁₃H₈ bestehen, für die Synthese eines Copolymers von Ethylen und Butadien, dessen von Butadien stammende Einheiten trans-1,4-Verknüpfungen gemäß einem Molenbruch von mehr als 50% umfassen.

9. Katalytisches System nach den Ansprüchen 4 und 7, **dadurch gekennzeichnet, dass** in dem metallorganischen Komplex Cp₁ und Cp₂ jeweils aus einer unsubstituierten Fluorenylgruppe der Formel C₁₃H₈ bestehen.

10. Katalytisches System nach den Ansprüchen 5 und 9, **dadurch gekennzeichnet, dass** der metallorganische Komplex die Formel [(C₁₃H₈)₂SiMe₂]NdCl aufweist, für die Synthese eines Copolymers von Ethylen und Butadien, dessen von Butadien stammende Einheiten trans-1,2-Cyclohexan-Verknüpfungen gemäß einem Molenbruch größer gleich 10% umfassen.

11. Verfahren zur Synthese eines Copolymers von Ethylen und Butadien mit einem zahlenmittleren Molekulargewicht Mn größer gleich 40.000 g/mol und einem Gehalt an von Butadien stammenden Einheiten, die Verknüpfungen in Form von trans-1,2-Cyclohexan umfassen, größer gleich 8%, bei dem man ein katalytisches System in Suspension oder in Lösung in einem Kohlenwasserstoff-Lösungsmittel, wie Toluol, und bei einer Temperatur zwischen -20°C und 120°C in Gegenwart von Ethylen und Butadien zur Reaktion bringt, **dadurch gekennzeichnet, dass** das katalytische System wie in einem der Ansprüche 2 bis 10 definiert ist.

12. Verfahren zur Synthese eines Copolymers von Ethylen und Butadien nach Anspruch 11, **dadurch gekennzeichnet, dass** man die Reaktion unter einem Druck im Bereich von 3 bis 50 bar durchführt.

## Claims

1. Catalytic system which can be used for the synthesis of a copolymer of ethylene and butadiene, the said catalytic system comprising:
(i) an organometallic complex represented by one of the following formulae A and B: 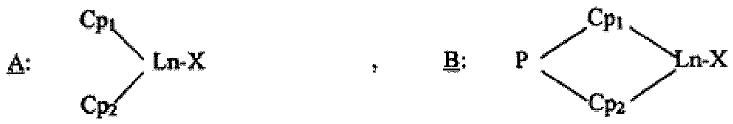 where Ln represents a lanthanide metal having an atomic number which can range from 57 to 71,
where X represents a halogen which can be chlorine, fluorine, bromine or iodine,
where, in the formula A, two identical or different ligand molecules Cp₁ and Cp₂, each composed of a fluorenyl group which is substituted or unsubstituted, are connected to the said metal Ln,
where, in the formula B, a ligand molecule composed of two identical or different fluorenyl groups Cp₁ and Cp₂ which are substituted or unsubstituted and which are connected to one another via a bridge P corresponding to the formula MR₂, where M is an element from Group IVa of the Periodic Table of the Elements and where R is an alkyl group comprising from 1 to 20 carbon atoms, is connected to the said metal Ln, and
(ii) a cocatalyst belonging to the group consisting of butyloctylmagnesium and butylmagnesium chloride,
**characterized in that** the cocatalyst/organometallic complex molar ratio belongs to a range extending from 1 to 8.

2. Catalytic system according to Claim 1, **characterized in that** the said cocatalyst/organometallic complex molar ratio belongs to a range extending from 1 to 3.

3. Catalytic system according to Claim 1 or 2, **characterized in that** the said organometallic complex is represented by the said generic formula A.

4. Catalytic system according to Claim 1 or 2, **characterized in that** the said organometallic complex is represented by the said generic formula B.

5. Catalytic system according to Claim 4, **characterized in that** the said element M included in the said bridge P of formula MR₂ is silicon.

6. Catalytic system according to one of Claims 1 to 5, **characterized in that**, in the said organometallic complex, the said lanthanide Ln is neodymium.

7. Catalytic system according to one of Claims 1 to 6, **characterized in that**, in the said organometallic complex, Cp₁ and Cp₂ each comprise one and the same fluorenyl group.

8. Catalytic system according to Claims 3 and 7, **characterized in that** the said organometallic complex corresponds to the formula (C₁₃H₉)₂NdCl, where Cp₁ and Cp₂ are each composed of an unsubstituted fluorenyl group which corresponds to the formula C₁₃H₉, for the synthesis of a copolymer of ethylene and butadiene, the units of which resulting from the butadiene comprise trans-1,4-enchainments according to a molar fraction of greater than 50%.

9. Catalytic system according to Claims 4 and 7, **characterized in that**, in the said organometallic complex, Cp₁ and Cp₂ are each composed of an unsubstituted fluorenyl group which corresponds to the formula C₁₃H₈.

10. Catalytic system according to Claims 5 and 9, **characterized in that** the said organometallic complex corresponds to the formula [(C₁₃H₈)₂SiMe₂]NdCl, for the synthesis of a copolymer of ethylene and butadiene, the units of which resulting from the butadiene comprise trans-1,2-cyclohexane enchainments according to a molar fraction equal to or greater than 10%.

11. Process for the synthesis of a copolymer of ethylene and butadiene with a number-average molecular weight Mn equal to or greater than 40 000 g/mol, comprising a molar content of units resulting from the butadiene equal to or greater than 8%, comprising enchainments in the form of trans-1,2-cyclohexane, comprising the reaction, in suspension or in solution, in a hydrocarbon solvent, such as toluene, and at a temperature of between -20°C and 120°C of a catalytic system in the presence of ethylene and butadiene, **characterized in that** the said catalytic system is as defined in one of Claims 2 to 10.

12. Process for the synthesis of a copolymer of ethylene and butadiene according to Claim 11, **characterized in that** the said reaction is carried out under a pressure belonging to a range extending from 3 to 50 bar.
